# EUROPEAN PATENT APPLICATION

(11) **EP 4 617 995 A1**
(43) Date of publication of application: **17.09.2025**
(21) Application number: 23899487.5
(22) Date of filing: 25.08.2023
(51) Int. Cl.: G06T 3/40

(54) **IMAGE STITCHING METHOD AND APPARATUS**

(30) Priority: 05.12.2022 CN 202211550973; 14.02.2023 CN 202310140790
(71) Applicant: Huawei Technologies Co., Ltd., Shenzhen, Guangdong 518129 (CN)
(72) Inventor: PENG, Lu, Shenzhen, Guangdong 518129 (CN); XU, Hai, Shenzhen, Guangdong 518129 (CN); LIN, Jianping, Shenzhen, Guangdong 518129 (CN)
(74) Representative: Pfenning, Meinig & Partner mbB
(86) International application number: PCT/CN2023/115094
(87) International publication number: WO 2024/119902

(57) **Abstract**

This application discloses an image stitching method and apparatus, and pertains to the field of image processing technologies. A plurality of frames of images captured by a multi-camera module at a same moment are obtained. When an overlapping area of fields of view of a first camera and a second camera that are adjacently deployed in the multi-camera module includes a to-be-shot object, a target stitching parameter is determined based on a plurality of groups of stitching parameters corresponding to the first camera and the second camera and a position of the to-be-shot object. An image captured by the first camera and an image captured by the second camera are stitched by using the target stitching parameter, to obtain a stitched image. In this application, camera parameters of the first camera and the second camera for different calibration positions in the overlapping area of fields of view are calibrated offline, to obtain stitching parameters corresponding to the different calibration positions. Further, a stitching parameter suitable for the position of the to-be-shot object is determined based on the stitching parameters corresponding to the plurality of calibration positions. In this way, an imaging stitching effect for the to-be-shot object is improved.

## Description

This application claims priorities to Chinese Patent Application No. 202211550973.3, filed on December 5, 2022 and entitled "IMAGE STITCHING METHOD", and to Chinese Patent Application No. 202310140790.2, filed on February 14, 2023 and entitled "IMAGE STITCHING METHOD AND APPARATUS", both of which are incorporated herein by reference in their entireties.

### TECHNICAL FIELD

This application relates to the field of image processing technologies, and in particular, to an image stitching method and apparatus.

### BACKGROUND

Currently, a field of view (field of view, FOV) of a camera used in a conference terminal is usually small, and a horizontal field of view of the camera is mostly within 90°. In medium- sized and large-sized conference rooms, an image shooting area of one camera cannot cover an entire conference scenario. As a result, participants may be in blind spots on two sides of the camera. To increase an image shooting angle of view, currently, a common method is to deploy a plurality of cameras to capture images, and then stitch the images captured by the plurality of cameras, to obtain a panoramic image. However, there is often a clear stitching gap in the panoramic image obtained by stitching the images captured by the plurality of cameras, and a stitching effect is poor. How to improve an image stitching effect is an urgent problem to be resolved currently.

### SUMMARY

This application provides an image stitching method and apparatus, to improve an image stitching effect.

According to a first aspect, an image stitching method is provided. The method may be applied to an image processing device. The method includes: obtaining a plurality of frames of images captured by a multi-camera module at a same moment, where the multi-camera module includes a plurality of cameras, the plurality of cameras include a first camera and a second camera that are adjacently deployed, the first camera and the second camera have an overlapping area of fields of view, and the plurality of frames of images include a first image captured by the first camera and a second image captured by the second camera; when the overlapping area of fields of view of the first camera and the second camera includes a to-be-shot object, determining a target stitching parameter based on a plurality of groups of stitching parameters corresponding to the first camera and the second camera and a position of the to-be-shot object, where the plurality of groups of stitching parameters are respectively obtained based on camera parameters calibrated by the first camera and the second camera for different calibration positions in the overlapping area of fields of view; and stitching the first image and the second image by using the target stitching parameter, to obtain a stitched image.

In this application, camera parameters of two adjacently-deployed cameras in the multi-camera module for different calibration positions in an overlapping area of fields of view are calibrated offline. For each calibration position, a stitching parameter may be further determined based on camera parameters obtained by the two cameras through calibration for the calibration position, to obtain stitching parameters respectively corresponding to the different calibration positions. When a to-be-shot object is located in the overlapping area of fields of view of the two cameras, the image processing device may determine, based on the stitching parameters respectively corresponding to the plurality of calibration positions in the overlapping area of fields of view, a stitching parameter suitable for a position of the to-be-shot object, so that a stitching effect of the position of the to-be-shot object in a stitched image is good. In this way, a display effect of the to-be-shot object in the stitched image is improved.

Optionally, each group of stitching parameters corresponding to the first camera and the second camera includes a parameter for projection transformation of an image captured by the first camera to an image captured by the second camera, or each group of stitching parameters corresponding to the first camera and the second camera includes a parameter for projection transformation of an image captured by the first camera to a target planar coordinate system and a parameter for projection transformation of an image captured by the second camera to the target planar coordinate system.

The parameter for projection transformation of the image captured by the first camera to the image captured by the second camera is used to transform the image captured by the first camera to a pixel coordinate system corresponding to the image captured by the second camera. The parameter for projection transformation of the image captured by the first camera to the target planar coordinate system is used to transform the image captured by the first camera to the target planar coordinate system, and the parameter for projection transformation of the image captured by the second camera to the target planar coordinate system is used to transform the image captured by the second camera to the target planar coordinate system. In this application, the image captured by the first camera and the image captured by the second camera are transformed to a same planar coordinate system, so that a pixel in the image captured by the first camera and a pixel in the image captured by the second camera can be paired.

Optionally, any two calibration positions in the plurality of calibration positions in the overlapping area of fields of view of the first camera and the second camera satisfy the following one or more conditions: Distances from the two calibration positions to a central position of the first camera and the second camera are different; horizontal angles of the two calibration positions relative to an arrangement direction of the first camera and the second camera are different; and vertical angles of the two calibration positions relative to the arrangement direction of the first camera and the second camera are different. The arrangement direction of the first camera and the second camera may be, for example, a direction of a straight line on which a connection line between the first camera and the second camera is located.

Optionally, the overlapping area of fields of view of the first camera and the second camera includes one to-be-shot object, and an implementation of determining the target stitching parameter based on the plurality of groups of stitching parameters corresponding to the first camera and the second camera and the position of the to-be-shot object includes: determining the target stitching parameter based on a stitching parameter corresponding to one or more calibration positions that are in the plurality of calibration positions and that are closest to the position of the to-be-shot object.

Optionally, an implementation of determining the target stitching parameter based on the stitching parameter corresponding to the one or more calibration positions that are in the plurality of calibration positions and that are closest to the position of the to-be-shot object includes: if the plurality of calibration positions include the position of the to-be-shot object, using a stitching parameter corresponding to the position of the to-be-shot object as the target stitching parameter; or if the plurality of calibration positions do not include the position of the to-be-shot object, determining the target stitching parameter based on stitching parameters corresponding to two calibration positions that are in the plurality of calibration positions and that are closest to the position of the to-be-shot object.

In this application, when there is only one to-be-shot object in the overlapping area of fields of view of the first camera and the second camera, the stitching parameter corresponding to the position of the to-be-shot object is used as the target stitching parameter, or the target stitching parameter is obtained through calculation based on the stitching parameters corresponding to the two calibration positions closest to the position of the to-be-shot object. When the target stitching parameter is used to stitch the image captured by the first camera and the image captured by the second camera, the stitching effect of the position of the to-be-shot object can be good, so that the display effect of the to-be-shot object in the stitched image can be ensured.

Optionally, an implementation of determining the target stitching parameter based on the stitching parameters corresponding to the two calibration positions that are in the plurality of calibration positions and that are closest to the position of the to-be-shot object includes: obtaining, through interpolation calculation based on distances between the position of the to-be-shot object and the two calibration positions by using the stitching parameters corresponding to the two calibration positions, the target stitching parameter corresponding to the position of the to-be-shot object.

Optionally, the overlapping area of fields of view of the first camera and the second camera includes a plurality of to-be-shot objects, and an implementation of determining the target stitching parameter based on the plurality of groups of stitching parameters corresponding to the first camera and the second camera and the position of the to-be-shot object includes: determining the target stitching parameter based on the plurality of groups of stitching parameters and positions of the plurality of to-be-shot objects.

This implementation may be used in a scenario in which the multi-camera module uses a director mode.

Optionally, an implementation of determining the target stitching parameter based on the plurality of groups of stitching parameters and the positions of the plurality of to-be-shot objects includes: using a stitching parameter corresponding to a target calibration position as the target stitching parameter, where the target calibration position is a calibration position that is in the plurality of calibration positions and that has a smallest sum of distances to the positions of the plurality of to-be-shot objects.

In this implementation, image stitching effects of the plurality of to-be-shot objects are comprehensively considered, and a stitching parameter corresponding to the calibration position that has the smallest sum of distances to the positions of the plurality of to-be-shot objects is selected as the target stitching parameter. When the target stitching parameter is used to stitch the image captured by the first camera and the image captured by the second camera, an overall stitching effect of the positions of the plurality of to-be-shot objects is good, so that an overall display effect of the plurality of to-be-shot objects in the stitched image is good. In addition, a calculation process of this implementation is simple, and a small quantity of processing resources are consumed.

Alternatively, another implementation of determining the target stitching parameter based on the plurality of groups of stitching parameters and the positions of the plurality of to-be-shot objects includes: obtaining, for each to-be-shot object in the plurality of to-be-shot objects, a stitching parameter corresponding to one or more calibration positions that are in the plurality of calibration positions and that are closest to the position of the to-be-shot object; and determining the target stitching parameter based on all the stitching parameters obtained for the plurality of to-be-shot objects.

In this implementation, image stitching effects of the plurality of to-be-shot objects are comprehensively considered, and the target stitching parameter is determined based on a stitching parameter corresponding to one or more calibration positions closest to the to-be-shot objects. When the target stitching parameter is used to stitch the image captured by the first camera and the image captured by the second camera, stitching effects of the positions of the plurality of to-be-shot objects can be compromised, so that the stitching effects of the positions of the plurality of to-be-shot objects tend to be consistent as much as possible. In this way, an overall display effect of the plurality of to-be-shot objects in the stitched image is good.

Optionally, after the first image and the second image are stitched by using the target stitching parameter, to obtain the stitched image, a cropped image is output to a screen for display, where the cropped image is obtained by cropping the stitched image, and the cropped image includes all the to-be-shot objects located in the overlapping area of fields of view of the first camera and the second camera.

Optionally, the overlapping area of fields of view includes a plurality of to-be-shot objects, and another implementation of determining the target stitching parameter based on the plurality of groups of stitching parameters corresponding to the first camera and the second camera and the position of the to-be-shot object includes: determining, for each to-be-shot object in the plurality of to-be-shot objects, a stitching parameter corresponding to the to-be-shot object based on a stitching parameter corresponding to one or more calibration positions that are in the plurality of calibration positions and that are closest to a position of the to-be-shot object. Correspondingly, an implementation of stitching the first image and the second image by using the target stitching parameter, to obtain the stitched image includes: stitching, for each to-be-shot object, the first image and the second image by using the stitching parameter corresponding to the to-be-shot object, to obtain a stitched image corresponding to the to-be-shot object.

This implementation may be used in a scenario in which the multi-camera module uses an intelligent equalization mode or a multi-person frame mode.

Optionally, after the first image and the second image are stitched for each to-be-shot object in the plurality of to-be-shot objects by using the stitching parameter corresponding to the to-be-shot object, to obtain the stitched image corresponding to the to-be-shot object, a combined image is output to a screen for display, where the combined image is obtained by combining a plurality of cropped images, the plurality of cropped images are respectively obtained by cropping a plurality of stitched images corresponding to the plurality of to-be-shot objects, and each cropped image includes a corresponding to-be-shot object in a cropped stitched image.

In this application, the image processing device performs image stitching once on each to-be-shot object in the plurality of to-be-shot objects to obtain a plurality of stitched images, to ensure a display effect of each to-be-shot object in a corresponding stitched image. In this way, a stitched image from which each to-be-shot object in the combined image output by the image processing device comes can ensure that the to-be-shot object has a good display effect. Therefore, a display effect of the finally output combined image can be ensured.

Optionally, the image processing device stores stitching parameters separately corresponding to two adjacently-deployed cameras in the multi-camera module in a plurality of deployment scenarios, and before the target stitching parameter is determined based on the plurality of groups of stitching parameters corresponding to the first camera and the second camera and the position of the to-be-shot object, a deployment scenario of the multi-camera module is obtained, and the plurality of groups of stitching parameters corresponding to the first camera and the second camera in the deployment scenario of the multi-camera module is obtained.

In this application, stitching parameters corresponding to different positions of the multi-camera module in a plurality of different deployment scenarios are provided, so that the image processing device can flexibly select a corresponding stitching parameter based on a deployment scenario of the multi-camera module, and therefore, an image stitching effect better matches a current deployment scenario. In this way, images captured by the multi-camera module in the different deployment scenarios can have a good image stitching effect. Alternatively, deployment scenarios of the multi-camera module may not be distinguished, and a same set of stitching parameters is used in all deployment scenarios.

According to a second aspect, an image stitching apparatus is provided. The apparatus includes a plurality of function modules, and the plurality of function modules interact with each other to implement the method according to the first aspect and the implementations of the first aspect. The plurality of function modules may be implemented based on software, hardware, or a combination of software and hardware, and the plurality of function modules may be randomly combined or divided based on specific implementation.

According to a third aspect, an image stitching apparatus is provided, including a processor and a memory.

The memory is configured to store a computer program, where the computer program includes program instructions.

The processor is configured to invoke the computer program, to implement the method according to the first aspect and the implementations of the first aspect.

According to a fourth aspect, a computer-readable storage medium is provided. The computer-readable storage medium stores instructions, and when the instructions are executed by a processor, the method according to the first aspect and the implementations of the first aspect is implemented.

According to a fifth aspect, a computer program product is provided, including a computer program. When the computer program is executed by a processor, the method according to the first aspect and the implementations of the first aspect is implemented.

According to a sixth aspect, a chip is provided. The chip includes a programmable logic circuit and/or program instructions. When the chip runs, the method according to the first aspect and the implementations of the first aspect is implemented.

### BRIEF DESCRIPTION OF DRAWINGS

FIG. 1 is a diagram of a structure of a multi-camera module according to an embodiment of this application;
FIG. 2 is a diagram of an application scenario according to an embodiment of this application;
FIG. 3 is a schematic flowchart of an image stitching method according to an embodiment of this application;
FIG. 4 is a diagram of a camera calibration scenario according to an embodiment of this application;
FIG. 5 is a diagram of a user interaction interface according to an embodiment of this application;
FIG. 6 is a diagram of a position of a to-be-shot object according to an embodiment of this application;
FIG. 7 is a diagram of another position of a to-be-shot object according to an embodiment of this application;
FIG. 8 is a diagram of still another position of a to-be-shot object according to an embodiment of this application;
FIG. 9 is a diagram of a conference room scenario according to an embodiment of this application;
FIG. 10 is a diagram of another conference room scenario according to an embodiment of this application;
FIG. 11 is a diagram of images captured by a multi-camera module according to an embodiment of this application;
FIG. 12 is a diagram of a stitched image according to an embodiment of this application;
FIG. 13 is a diagram of a cropped image according to an embodiment of this application;
FIG. 14 is a diagram of other images captured by a multi-camera module according to an embodiment of this application;
FIG. 15 is a diagram of a combined image according to an embodiment of this application;
FIG. 16 is a diagram of a structure of an image stitching apparatus according to an embodiment of this application; and
FIG. 17 is a diagram of a hardware structure of an image processing device according to an embodiment of this application.

### DESCRIPTION OF EMBODIMENTS

To make the objectives, technical solutions, and advantages of this application clearer, the following further describes the implementations of this application in detail with reference to the accompanying drawings.

To help readers understand the technical solutions of this application, some terms in embodiments of this application are first described.

1. Object detection (object detection, OD): Object detection is to find all objects (objects) of interest in an image, and determine a type of the object and a position of the object in the image.

2. Sound source localization (sound source localization, SSL): A plurality of microphones are used to measure a sound signal at different position points in an environment. Because time at which the sound signal arrives at each microphone is delayed to different degrees, the measured sound signal is processed by using an algorithm, to obtain an arrival direction (including an azimuth and a pitch angle) and a distance of a sound source point relative to the microphone.

3. Sound image matching: Sound source positioning coordinates are mapped to a corresponding pixel position in an image by using frame positions and sound source positioning coordinates of all objects in the image as an input, so that a sound-maker, for example, a speaker, can be found. This process is referred to as sound image matching. The frame position of the object is a position of a frame including the object, and the frame may be an annotated real frame or a predicted frame obtained through target detection.

4. Pixel coordinate system: The pixel coordinate system is a coordinate system in which an upper left vertex of an image captured by a camera is used as a coordinate origin. An x-axis (a horizontal axis) and a y-axis (a vertical axis) of the pixel coordinate system are respectively a width direction and a height direction of the image captured by the camera.

5. World coordinate system: The world coordinate system can describe a position of a camera in the real world, and can also describe a position of an object in an image captured by the camera in the real world.

6. Camera calibration: Camera calibration is a process of solving, by using a series of algorithms, a projection transformation relationship between a world coordinate system and a pixel coordinate system corresponding to an image captured by a camera, and may also be understood as a process of determining a camera parameter. The camera parameter includes an intrinsic camera parameter and an extrinsic camera parameter. The intrinsic camera parameter is an inherent attribute of the camera, includes a distortion coefficient, and is related to a focal length and a cell size of the camera. The extrinsic camera parameter is related to a pose of the camera in the world coordinate system. The pose includes a position and a posture. The position refers to coordinates of the camera in the world coordinate system, and the posture refers to an orientation of the camera in the world coordinate system.

An image stitching technology is an increasingly popular research field, and has become a hot research topic in photographic drawing, computer vision, image processing, and computer graphics. A series of spatially overlapping images are processed by using the image stitching technology to form a high-definition image. The stitched image has higher resolution and a larger field of view than a single image. However, due to binocular parallax between different cameras and impact of factors such as a stitching algorithm error and limited computing power, there is often a clear stitching gap in a panoramic image obtained by stitching images captured by a plurality of cameras, and transition is unnatural. In a conference scenario, when a participant is located in an image overlapping area, a face or a human body may not be completely displayed due to a stitching gap, affecting an image display effect.

To improve an image stitching effect, currently, there are mainly two common image stitching technologies. One image stitching technology is to perform online stitching by using an unchanged stitching parameter generated offline. A main principle is to perform offline calibration on a multi-camera module before delivery or before installation, to obtain an unchanged camera parameter of each camera in the multi-camera module, then obtain the unchanged stitching parameter based on the unchanged camera parameter of each camera, and stitch images captured by the multi-camera module by using the unchanged stitching parameter. The camera parameter includes an intrinsic camera parameter and an extrinsic camera parameter, and the intrinsic camera parameter includes a distortion parameter. In this image stitching technology, because the stitching parameter used during image stitching is always unchanged, in an overlapping area of a finally obtained stitched image, stitching effects of some positions are good, and stitching effects of some positions are poor. As a result, stitching effects of a plurality of positions in the image overlapping area cannot be ensured. The other image stitching technology is to perform online real-time stitching. During stitching, feature points in an image overlapping area are detected and matched, to generate a stitched camera image mapping relationship in real time. In this image stitching technology, an overlapping area of fields of view of two adjacently-deployed cameras needs to be large, and there needs to be a clear feature point in the overlapping area of fields of view. Otherwise, an error is likely to occur during feature point matching, resulting in a poor stitching effect. In addition, feature point detection and matching need to be performed in real time for each frame of image captured by each camera. Therefore, computing power required for image stitching is high.

Based on this, embodiments of this application provide an image stitching method. A multi-camera module captures an image. The multi-camera module includes a plurality of cameras, relative deployment positions of the plurality of cameras are unchanged, and two adjacently-deployed cameras in the plurality of cameras have an overlapping area of fields of view. After an image processing device obtains a plurality of frames of images captured by the multi-camera module at a same moment, when an overlapping area of fields of view of two adjacently-deployed cameras in the multi-camera module includes a to-be-shot object, a target stitching parameter is determined based on a plurality of groups of stitching parameters corresponding to the two cameras and a position of the to-be-shot object, and then, images captured by the two cameras are stitched by using the target stitching parameter, to obtain a stitched image. The plurality of groups of stitching parameters corresponding to the two cameras are respectively obtained based on camera parameters calibrated by the two cameras for different calibration positions in the overlapping area of fields of view. In embodiments of this application, the camera parameters of the two adjacently-deployed cameras in the multi-camera module for the different calibration positions in the overlapping area of fields of view are calibrated offline. For each calibration position, a stitching parameter may be further determined based on camera parameters obtained by the two cameras through calibration for the calibration position, to obtain stitching parameters respectively corresponding to the different calibration positions. When the to-be-shot object is located in the overlapping area of fields of view of the two cameras, the image processing device may determine, based on the stitching parameters respectively corresponding to the plurality of calibration positions in the overlapping area of fields of view, a stitching parameter suitable for the position of the to-be-shot object, so that a stitching effect of the position of the to-be-shot object in the stitched image is good. In this way, a display effect of the to-be-shot object in the stitched image is improved. In addition, in embodiments of this application, feature point detection and matching do not need to be performed on an image. This is applicable to more image shooting scenarios and requires low computing power.

The following describes in detail the technical solutions provided in this application from a plurality of perspectives such as an application scenario, a method procedure, a software apparatus, and a hardware apparatus.

The following describes application scenarios of embodiments of this application by using examples.

An image stitching method provided in embodiments of this application may be applied to an image processing device. The image processing device may be a multi-camera module, or may be a display device, or may be a video server connected to a display device. Optionally, the display device has a built-in multi-camera module, or the display device is connected to an external multi-camera module. The multi-camera module includes a plurality of cameras, and relative deployment positions of the plurality of cameras are unchanged. The plurality of cameras are separately configured to capture images of different image shooting areas, to obtain a plurality of video streams. The multi-camera module may also be referred to as a panoramic camera. The image processing device is configured to stitch a plurality of frames of images captured by the multi-camera module at a same moment, so that the display device displays a stitched image. The video server may be a server, a server cluster including a plurality of servers, a cloud computing platform, or the like.

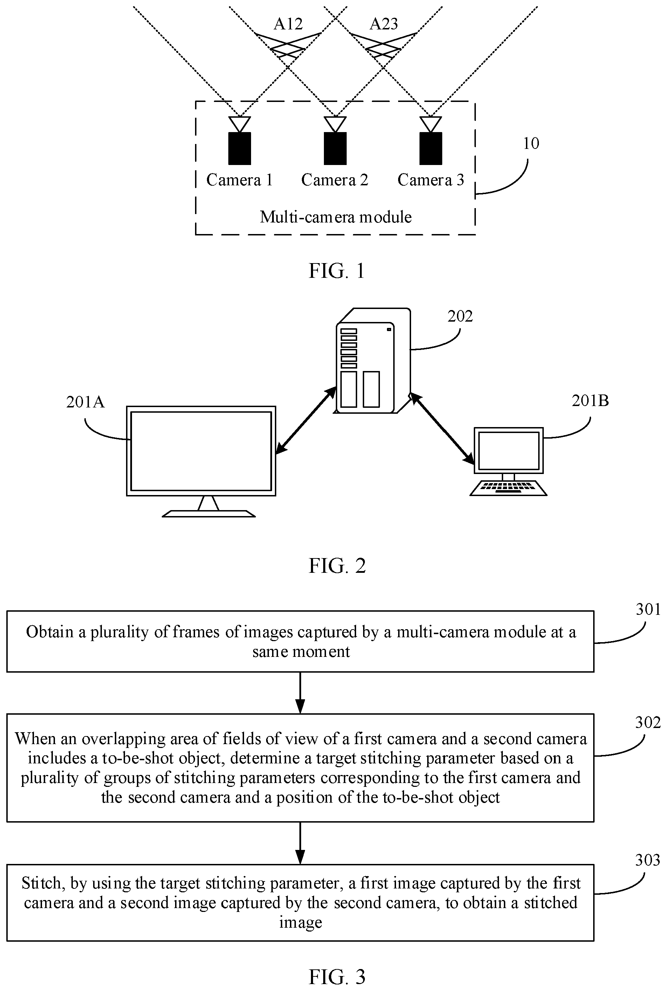

Optionally, all cameras in the multi-camera module capture images at a same moment and frequency. For example, a camera synchronization technology may be used to implement synchronous image shooting of all cameras in the multi-camera module. Any two adjacent cameras in the multi-camera module have an overlapping area of fields of view. That two cameras have an overlapping area of fields of view means that the two cameras have an overlapping image shooting area. Optionally, the plurality of cameras in the multi-camera module may be arranged in a straight-line manner, a sector-shaped manner, another irregular arrangement manner, or the like. A corresponding camera arrangement manner may be designed based on an actual image shooting scenario. For example, FIG. 1 is a diagram of a structure of a multi-camera module according to an embodiment of this application. As shown in FIG. 1, the multi-camera module 10 includes three cameras: camera 1 to camera 3. Camera 1 to camera 3 are sequentially arranged in a straight-line manner. Camera 1 and camera 2 have an overlapping area A12 of fields of view. Camera 2 and camera 3 have an overlapping area A23 of fields of view. A quantity of cameras included in the multi-camera module and a camera arrangement manner shown in FIG. 1 are merely used as an example for description, and are not intended to limit the multi-camera module in embodiments of this application.

Optionally, an encoding format of an image captured by a camera in the multi-camera module may be RGB, YUV, HSV, or the like. In RGB, R (red) is a red component, G (green) is a green component, and B (blue) is a blue component. In YUV, Y is a luminance component, and U and V are color components. In HSV, H (hue) is a hue component, S (saturation) is a saturation component, and V (value) is a value component. Resolution of the image captured by the camera may be 4K, or may be 1080P, 720P, 540P, 360P, or the like. An aspect ratio of the image captured by the camera may be 4:3, 16:9, or the like. Encoding formats, resolution, and aspect ratios of images captured by different cameras in the multi-camera module may be the same or may be different. If the encoding formats, resolution, and aspect ratios are different, the images need to be converted into a unified format before image processing. The encoding format, resolution, and aspect ratio of the image captured by the camera are not limited in embodiments of this application.

The image stitching method provided in embodiments of this application may be used in a plurality of scenarios, including but not limited to a video conference scenario, a surveillance scenario, or a video live broadcast scenario. In embodiments of this application, an example in which the image stitching method is used in a video conference scenario is used for description. The display device may be a conference terminal, for example, may be an electronic device having a display function, like a large screen, an electronic whiteboard, a mobile phone, a tablet computer, or an intelligent wearable device.

For example, FIG. 2 is a diagram of an application scenario according to an embodiment of this application. This application scenario is a video conference scenario. As shown in FIG. 2, the application scenario includes a conference terminal 201A and a conference terminal 201B (collectively referred to as a conference terminal 201). The conference terminal 201A is communicatively connected to the conference terminal 201B. The conference terminal 201A has a built-in multi-camera module (not shown in the figure).

Still refer to FIG. 2. Optionally, the application scenario further includes a video server 202. The plurality of conference terminals 201 are separately connected to the video server 202. The plurality of conference terminals 201 communicate with each other via the video server 202. The video server 202 may be, for example, a multi control unit (multi control unit, MCU). Certainly, a case in which different conference terminals are directly connected to each other is included in embodiments of this application.

In the application scenario shown in FIG. 2, after the conference terminal 201A obtains a plurality of video streams captured by the built-in multi-camera module, the conference terminal 201A may perform stitching processing on a plurality of frames of images captured at a same moment in the plurality of video streams, and send a stitched image obtained through stitching to the video server 202 as a video stream. Then, the video server 202 sends the stitched image to the conference terminal 201B, and the conference terminal 201B displays the stitched image. Alternatively, the conference terminal 201A may send the plurality of video streams to the video server 202. The video server 202 performs stitching processing on the plurality of frames of images captured at the same moment in the plurality of video streams, and then sends the stitched image obtained through stitching to the conference terminal 201B as a video stream. The conference terminal 201B displays the stitched image. Alternatively, the conference terminal 201A may send the plurality of video streams to the video server 202. The video server 202 sends the plurality of video streams to the conference terminal 201B. Then, the conference terminal 201B performs stitching processing on the plurality of frames of images captured at the same moment in the plurality of video streams, and displays the stitched image obtained through stitching. In other words, the image stitching method provided in embodiments of this application may be performed by an image capturing device (for example, the conference terminal 201A), or may be performed by an image forwarding device (for example, the video server 202), or may be performed by an image receiving device (for example, the conference terminal 201B). An execution body of the solution is not limited in embodiments of this application.

The following describes method procedures in embodiments of this application by using examples.

For example, FIG. 3 is a schematic flowchart of an image stitching method according to an embodiment of this application. The method may be applied to an image processing device. The image processing device may be, for example, the conference terminal 201A, the video server 202, or the conference terminal 201B in the application scenario shown in FIG. 2. As shown in FIG. 3, the method includes but is not limited to the following step 301 to step 303.

Step 301: Obtain a plurality of frames of images captured by a multi-camera module at a same moment.

The multi-camera module includes a plurality of cameras, and the plurality of cameras include a first camera and a second camera that are adjacently deployed. The first camera and the second camera have an overlapping area of fields of view. The plurality of frames of images captured by the multi-camera module at the same moment include a first image captured by the first camera and a second image captured by the second camera. In the following embodiments of this application, the first camera and the second camera that are adjacently deployed in the multi-camera module are used as an example to describe a process of stitching an image captured by the first camera and an image captured by the second camera. For a process of stitching images captured by other adjacently-deployed cameras in the multi-camera module, refer to the process of stitching the image captured by the first camera and the image captured by the second camera. Details are not described one by one in embodiments of this application.

Optionally, after obtaining the plurality of frames of images captured by the multi-camera module at the same moment, the image processing device may first separately preprocess the plurality of frames of images to remove noise from the images. For example, the image processing device may perform median filtering processing on the images, and then perform a subsequent stitching procedure on preprocessed images.

Step 302: When the overlapping area of fields of view of the first camera and the second camera includes a to-be-shot object, determine a target stitching parameter based on a plurality of groups of stitching parameters corresponding to the first camera and the second camera and a position of the to-be-shot object.

The plurality of groups of stitching parameters corresponding to the first camera and the second camera are respectively obtained based on camera parameters calibrated by the first camera and the second camera for different calibration positions in the overlapping area of fields of view. In other words, a group of stitching parameters corresponding to the first camera and the second camera are obtained based on camera parameters calibrated by the first camera and the second camera for a same calibration position in the overlapping area of fields of view. Optionally, any two calibration positions in the plurality of calibration positions in the overlapping area of fields of view of the first camera and the second camera satisfy the following one or more conditions: Distances from the two calibration positions to a central position of the first camera and the second camera are different; horizontal angles of the two calibration positions relative to an arrangement direction of the first camera and the second camera are different; and vertical angles of the two calibration positions relative to the arrangement direction of the first camera and the second camera are different. The arrangement direction of the first camera and the second camera may be, for example, a direction of a straight line on which a connection line between the first camera and the second camera is located.

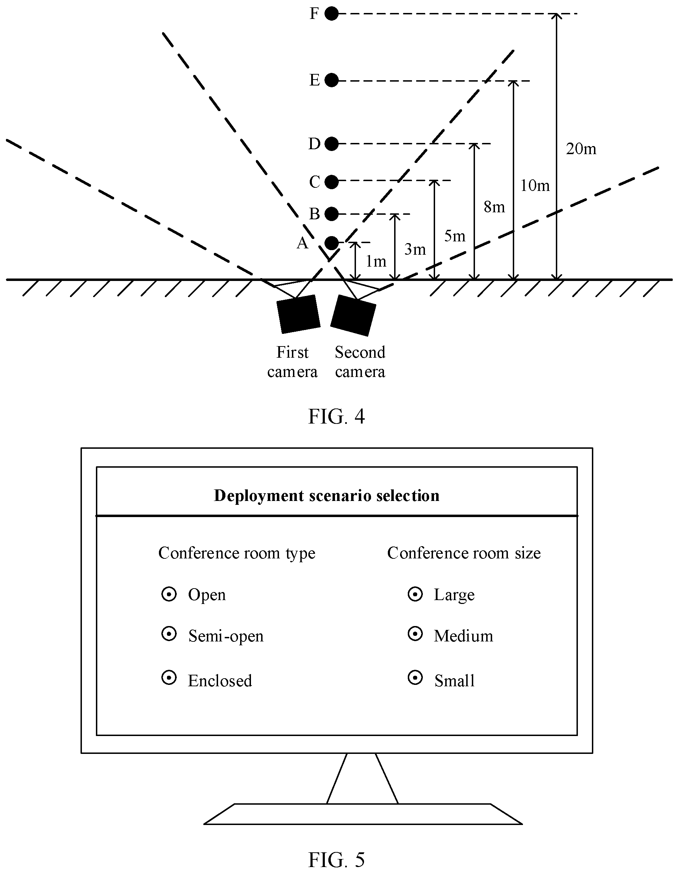

Optionally, a camera parameter of each camera in the multi-camera module may be obtained through offline calibration. The offline calibration may be performed before delivery of a product, during product installation, or after product installation. For example, FIG. 4 is a diagram of a camera calibration scenario according to an embodiment of this application. For example, distances from different calibration positions to the multi-camera module are different. As shown in FIG. 4, six calibration positions are disposed in the overlapping area of fields of view of the first camera and the second camera, including calibration positions A to F. Distances from the calibration positions A to F to the multi-camera module are 1m, 3m, 5m, 8m, 10m, and 20m respectively. Before the multi-camera module is used, camera calibration is first performed on the first camera and the second camera for the calibration positions A to F, to obtain six groups of camera parameters calibrated by the first camera for the calibration positions A to F and six groups of camera parameters calibrated by the second camera for the calibration positions A to F. When a camera performs imaging by using a camera parameter calibrated for a calibration position, an imaging effect of the calibration position is better than an imaging effect of another position. For example, a reprojection error of the calibration position is lower.

An implementation of camera calibration is not limited in embodiments of this application. In an implementation, a checkerboard may be used as a calibration reference object for calibration. Specifically, the checkerboard is placed in different positions in an image shooting scenario, a plurality of images including the checkerboard are separately shot, then a checkerboard corner position is detected, and a corresponding camera parameter is obtained through solving by using a calibration algorithm. The calibration algorithm herein may be a Zhang Zhengyou calibration algorithm, or may be another algorithm. In this implementation, more images shot by the camera when the checkerboard is placed in a calibration position may be used for camera calibration. Correspondingly, a camera parameter calibrated by the camera for the calibration position may be obtained. In another implementation, the checkerboard does not need to be used as a calibration reference object. For example, an active vision camera calibration method may be used to calibrate a known camera based on some motion information of the camera. Alternatively, a self-calibration algorithm may be used, including but not limited to a QR decomposition method of Hartley, an absolute quadratic surface method of Triggs, and a modulus constraint method of Pollefeys.

Optionally, after camera parameters calibrated by the first camera for the plurality of calibration positions in the overlapping area of fields of view of the first camera and the second camera and camera parameters calibrated by the second camera for the plurality of calibration positions are obtained, stitching parameters respectively corresponding to the plurality of calibration positions may be further obtained through calculation.

Optionally, each group of stitching parameters corresponding to the first camera and the second camera includes a parameter for projection transformation an image captured by the first camera to an image captured by the second camera. The projection transformation parameter is used to transform the image captured by the first camera to a pixel coordinate system corresponding to the image captured by the second camera. In embodiments of this application, the image captured by the second camera is used as a reference image, and the image captured by the first camera is used as a to-be-registered image. The parameter for projection transformation of the image captured by the first camera to the image captured by the second camera may be represented by using a pixel coordinate mapping table. The pixel coordinate mapping table includes correspondences between a plurality of pixel coordinates in the image captured by the first camera and a plurality of pixel coordinates in the image captured by the second camera. The correspondence herein may be a correspondence between one or more pixel coordinates in the image captured by the first camera and one set of pixel coordinates in the image captured by the second camera. For example, pixel coordinates (x1, y1) in the image captured by the first camera correspond to pixel coordinates (x2, y2) in the image captured by the second camera. In this case, when the image captured by the first camera is transformed to the pixel coordinate system corresponding to the image captured by the second camera, a pixel value at the pixel coordinates (x1, y1) may be correspondingly set at the pixel coordinates (x2, y2). For another example, pixel coordinates (x11, y11) and (x12, y12) in the image captured by the first camera correspond to the pixel coordinates (x2, y2) in the image captured by the second camera. In this case, when the image captured by the first camera is transformed to the pixel coordinate system corresponding to the image captured by the second camera, interpolation calculation, average value calculation, or the like may be performed on a pixel value at the pixel coordinates (x11, y11) and a pixel value at the pixel coordinates (x12, y12), and a pixel value obtained through calculation is correspondingly set at the pixel coordinates (x2, y2). Alternatively, the parameter for projection transformation of the image captured by the first camera to the image captured by the second camera may be represented by using an image transformation matrix. In this case, the image processing device may multiply pixel coordinates of the image captured by the first camera by the image transformation matrix, to obtain pixel coordinates of the image captured by the first camera in the pixel coordinate system corresponding to the image captured by the second camera.

In embodiments of this application, for a calibration position in the overlapping area of fields of view of the first camera and the second camera, the parameter for projection transformation of the image captured by the first camera to the image captured by the second camera may be obtained through calculation by using a camera parameter calibrated by the first camera for the calibration position and a camera parameter calibrated by the second camera for the calibration position. For example, cylindrical projection transformation or spherical projection transformation may be performed, by using the camera parameter calibrated by the first camera for the calibration position, on the image captured by the first camera, and cylindrical projection transformation or spherical projection transformation may be performed, by using the camera parameter calibrated by the second camera for the calibration position, on the image captured by the second camera, so that the image captured by the first camera and the image captured by the second camera are projected and transformed to a same cylindrical surface or a same spherical surface. In this way, a same pixel in an overlapping area of the image captured by the first camera and the image captured by the second camera is determined. Then, a pixel coordinate mapping table is generated based on pixel coordinates of a plurality of pixels in the overlapping area in the image captured by the first camera and pixel coordinates of the plurality of pixels in the overlapping area in the image captured by the second camera. Alternatively, an image transformation matrix of the image captured by the first camera to the image captured by the second camera is calculated.

Alternatively, each group of stitching parameters corresponding to the first camera and the second camera includes a parameter for projection transformation of an image captured by the first camera to a target planar coordinate system and a parameter for projection transformation of an image captured by the second camera to the target planar coordinate system. The target planar coordinate system is different from a pixel coordinate system corresponding to the image captured by the first camera and a pixel coordinate system corresponding to the image captured by the second camera. The parameter for projection transformation of the image captured by the first camera to the target planar coordinate system and the parameter for projection transformation of the image captured by the second camera to the target planar coordinate system may be separately represented by using a pixel coordinate mapping table. For example, the parameter for projection transformation of the image captured by the first camera to the target planar coordinate system may be represented by using a pixel coordinate mapping table A. The pixel coordinate mapping table A includes correspondences between a plurality of pixel coordinates in the image captured by the first camera and a plurality of coordinates in the target planar coordinate system. The parameter for projection transformation of the image captured by the second camera to the target planar coordinate system may be represented by using a pixel coordinate mapping table B. The pixel coordinate mapping table B includes correspondences between a plurality of pixel coordinates in the image captured by the second camera and a plurality of coordinates in the target planar coordinate system. Alternatively, the parameter for projection transformation of the image captured by the first camera to the target planar coordinate system and the parameter for projection transformation of the image captured by the second camera to the target planar coordinate system may be separately represented by using an image transformation matrix. For example, the parameter for projection transformation of the image captured by the first camera to the target planar coordinate system may be represented by using an image transformation matrix A, and the parameter for projection transformation of the image captured by the second camera to the target planar coordinate system may be represented by using an image transformation matrix B. The image processing device may multiply pixel coordinates of the image captured by the first camera by the image transformation matrix A, to obtain pixel coordinates of the image captured by the first camera in the target planar coordinate system. The image processing device may multiply pixel coordinates of the image captured by the second camera by the image transformation matrix B, to obtain pixel coordinates of the image captured by the second camera in the target planar coordinate system.

For a calibration position in the overlapping area of fields of view of the first camera and the second camera, the parameter for projection transformation of the image captured by the first camera to the target planar coordinate system may be obtained through calculation by using a camera parameter calibrated by the first camera for the calibration position. For example, cylindrical projection transformation or spherical projection transformation may be performed, by using the camera parameter calibrated by the first camera for the calibration position, on the image captured by the first camera, and then a cylindrical image or a spherical image is projected to a plane on which the target planar coordinate system is located. The pixel coordinate mapping table A is generated based on pixel coordinates of a plurality of pixels in the image captured by the first camera and coordinates of the plurality of pixels in the target planar coordinate system, or the parameter for projection transformation of the image captured by the first camera to the target planar coordinate system is calculated. Similarly, the parameter for projection transformation of the image captured by the second camera to the target planar coordinate system may be obtained through calculation by using a camera parameter calibrated by the second camera for the calibration position. For a specific calculation manner, refer to a manner of calculating the parameter for projection transformation of the image captured by the first camera to the target planar coordinate system. Details are not described herein again in embodiments of this application.

In embodiments of this application, a pixel in the image captured by the first camera and a pixel in the image captured by the second camera may be paired based on the pixel coordinate mapping table. Alternatively, the image captured by the first camera and the image captured by the second camera may be transformed to a same planar coordinate system, so that a pixel in the image captured by the first camera and a pixel in the image captured by the second camera is paired.

Optionally, each group of stitching parameters corresponding to the first camera and the second camera further includes an image fusion parameter, and the image fusion parameter is used to perform image fusion processing on the image captured by the first camera and the image captured by the second camera. The image fusion parameter includes but is not limited to pixel value weights of the image captured by the first camera and the image captured by the second camera, an exposure weight of the image captured by the first camera, an exposure weight of the image captured by the second camera, a white balance weight of the image captured by the first camera, a white balance weight of the image captured by the second camera, or the like. A pixel value weight is used to calculate a pixel value of a pixel in the overlapping area of the image captured by the first camera and the image captured by the second camera, and the pixel value weight specifically includes a proportion of a pixel value of the image captured by the first camera in a fused image and a proportion of a pixel value of the image captured by the second camera in the fused image. An exposure weight is used to adjust image brightness. The exposure weight of the image captured by the first camera is used to adjust brightness of the image captured by the first camera, and the exposure weight of the image captured by the second camera is used to adjust brightness of the image captured by the second camera. The exposure weight is set, so that the brightness of the image captured by the first camera and the brightness of the image captured by the second camera can tend to be consistent. A white balance weight is used to adjust image chroma. The white balance weight of the image captured by the first camera is used to adjust chroma of the image captured by the first camera, and the white balance weight of the image captured by the second camera is used to adjust chroma of the image captured by the second camera. The white balance weight is set, so that the chroma of the image captured by the first camera and the chroma of the image captured by the second camera can tend to be consistent. The image fusion parameter may be manually set and adjustable.

In embodiments of this application, when the image captured by the first camera and the image captured by the second camera are stitched by using a stitching parameter corresponding to a calibration position in the overlapping area of fields of view of the first camera and the second camera, a stitching effect of the calibration position is better than a stitching effect of another position.

Optionally, the image processing device may store correspondences between a plurality of groups of stitching parameters corresponding to two adjacently-deployed cameras in the multi-camera module and a plurality of calibration positions in an overlapping area of fields of view of the two cameras. Alternatively, the image processing device may store correspondences between a plurality of groups of camera parameters of each of two adjacently-deployed cameras in the multi-camera module and a plurality of calibration positions in an overlapping area of fields of view of the two cameras. When a stitching parameter corresponding to the two cameras needs to be used, the image processing device calculates the corresponding stitching parameter based on camera parameters of the two cameras that correspond to each calibration position.

In embodiments of this application, stitching parameters corresponding to a plurality of different calibration positions may be further generated for different deployment scenarios. A video conference scenario is used as an example. Different deployment scenarios are different conference room scenarios, including different conference room types and/or different conference room sizes. A conference room may be classified into three types: an open conference room, a semi-open conference room, and an enclosed conference room, or may be classified into two types: an indoor conference room and an outdoor conference room. A size of the conference room includes a length (a maximum depth distance from the multi-camera module), a width (a left-right width), and a height (an up-down height) of the conference room. For example, in embodiments of this application, stitching parameters in different positions may be separately generated for each scenario in nine conference room scenarios including three conference room types of the open conference room, the semi-open conference room, and the enclosed conference room, and three conference room sizes. For example, for an enclosed and large conference room, stitching parameters corresponding to six positions that are 1m, 3m, 5m, 8m, 10m, and 20m away from the multi-camera module may be generated.

In a possible implementation, the image processing device stores stitching parameters separately corresponding to two adjacently-deployed cameras in the multi-camera module in a plurality of deployment scenarios. In this case, before determining the target stitching parameter based on the plurality of groups of stitching parameters corresponding to the first camera and the second camera and the position of the to-be-shot object, the image processing device needs to first obtain a deployment scenario of the multi-camera module, and then obtain the plurality of groups of stitching parameters corresponding to the first camera and the second camera in the deployment scenario of the multi-camera module.

In this implementation, the image processing device first needs to obtain the deployment scenario of the multi-camera module. Optionally, the deployment scenario of the multi-camera module may be determined by the image processing device based on an image captured by the multi-camera module, or may be identified by another sensor, or may be input or selected on a user interaction interface.

For example, the deployment scenario of the multi-camera module is a video conference scenario. The image processing device may identify a type of a conference room and estimate a size of the conference room based on the image captured by the multi-camera module. In a specific implementation, the image processing device may use a classification algorithm for images captured by one or more cameras in the multi-camera module to identify a current conference room type. If images captured by a plurality of cameras are used for classification, the image processing device may separately classify images captured by each camera, and perform weighted averaging on classification results to obtain a final classification result. Alternatively, the image processing device may input images captured by a plurality of cameras into a classification model, and then obtain a classification result output by the classification model. In another specific implementation, the image processing device may perform three-dimensional layout (3D layout) spatial size estimation based on a monocular image, for example, perform spatial size estimation on the input monocular image by using a deep learning model. Alternatively, a millimeter-wave radar, an ultrasonic radar, a multi-microphone array, or the like may be used to perform ranging or generate a three-dimensional point cloud image, to obtain a size of a conference room through calculation, and then determine a conference room scenario by using a classification model. The image identification solution and the sensor identification solution may alternatively be used in combination. For example, a type of a conference room may be determined based on an image, and a size of the conference room may be calculated by using a millimeter-wave radar, so that a conference room scenario is determined based on the type of the conference room and the size of the conference room.

Optionally, the image processing device may display, on a user interaction interface, options of a plurality of deployment scenarios for a user to select. For example, FIG. 5 is a diagram of a user interaction interface according to an embodiment of this application. As shown in FIG. 5, the user interaction interface is a deployment scenario selection interface, and the user interaction interface includes three conference room type options and three conference room size options. The three conference room type options are respectively open, semi-open, and enclosed, and the three conference room size options are respectively large, medium, and small. Optionally, the conference room size options may further include specific conference room sizes separately corresponding to large, medium, and small, for example, a length, a width, and a height, which are not shown one by one in the figure. The user may select a conference room type and a conference room size on the user interaction interface, and then the image processing device determines, based on a user selection result, a conference room scenario in which the multi-camera module is deployed.

In embodiments of this application, stitching parameters corresponding to different positions of the multi-camera module in a plurality of different deployment scenarios are provided, so that the image processing device can flexibly select a corresponding stitching parameter based on a deployment scenario of the multi-camera module, and therefore, an image stitching effect better matches a current deployment scenario. In this way, images captured by the multi-camera module in the different deployment scenarios can have a good image stitching effect. Alternatively, deployment scenarios of the multi-camera module may not be distinguished, and a same set of stitching parameters is used in all deployment scenarios. This is not limited in embodiments of this application.

Optionally, there may be one to-be-shot object or a plurality of to-be-shot objects in the overlapping area of fields of view of the first camera and the second camera. The image processing device may estimate, based on an image, a sound, or a sensor, a position of the to-be-shot object. Position estimation may be implemented by using a director technology. For example, if the to-be-shot object is a person, a position of the person may be determined through face or human body tracking, or a position of the person may be determined through sound source positioning, or a position of the person may be determined through a millimeter-wave sensor or an ultrasonic sensor by using a liveness detection algorithm, or a position of a moving object determined by using a motion detection algorithm is used as a position of the person, or a position of the person is determined by using at least two of the foregoing position estimation solutions. Alternatively, a position of the to-be-shot object may be manually entered. For example, the user may enter position coordinates on the user interaction interface. A manner in which the image processing device obtains the position of the to-be-shot object is not limited in embodiments of this application.

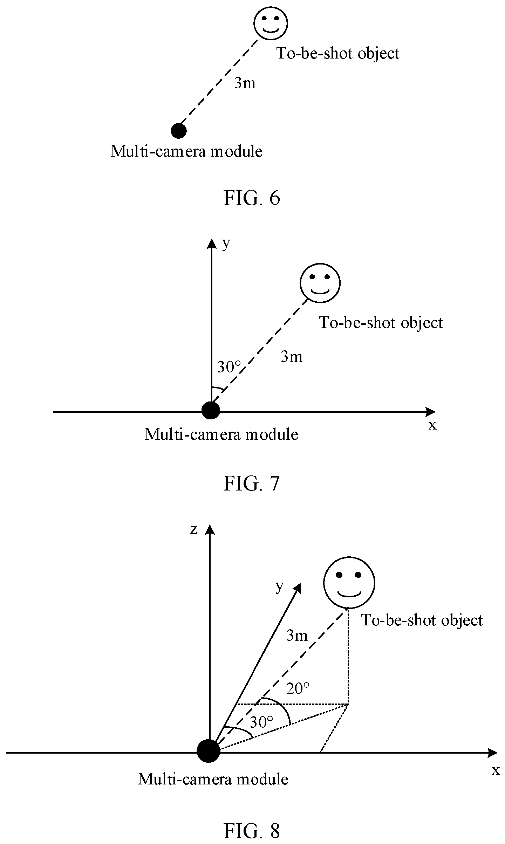

Optionally, the position of the to-be-shot object may be one-dimensional, two-dimensional, or three-dimensional. A dimension of the position of the to-be-shot object determined herein may be consistent with a dimension of a calibration position selected during camera calibration. For example, a one-dimensional representation of the position of the to-be-shot object located in the overlapping area of fields of view of the two adjacently-deployed cameras may be a distance from the to-be-shot object to a central position of the two cameras, or a horizontal (left-right) angle of the to-be-shot object relative to an arrangement direction of the two cameras, or a vertical (up-down) angle of the to-be-shot object relative to the arrangement direction of the two cameras. A two-dimensional representation of the position of to-be-shot object located in the overlapping area of fields of view of the two adjacently-deployed cameras may be a distance from the to-be-shot object to a central position of the two cameras and a horizontal angle of the to-be-shot object relative to an arrangement direction of the two cameras, the distance from the to-be-shot object to the central position of the two cameras and a vertical angle of the to-be-shot object relative to the arrangement direction of the two cameras, or the horizontal angle of the to-be-shot object relative to the arrangement direction of the two cameras and the vertical angle of the to-be-shot object relative to the arrangement direction of the two cameras. A three-dimensional representation of the position of the to-be-shot object may be a distance from the to-be-shot object to a central position of the two cameras, a horizontal angle of the to-be-shot object relative to an arrangement direction of the two cameras, and a vertical angle of the to-be-shot object relative to the arrangement direction of the two cameras. For example, FIG. 6 to FIG. 8 each are a diagram of a position of a to-be-shot object according to an embodiment of this application. As shown in FIG. 6, a distance from the to-be-shot object to the multi-camera module is 3m. As shown in FIG. 7, a distance from the to-be-shot object to the multi-camera module is 3m, and a horizontal angle of the to-be-shot object relative to the multi-camera module is 30°, where 0° represents the front, a positive horizontal angle represents that the to-be-shot object is located on a right side of the multi-camera module, and a negative horizontal angle represents that the to-be-shot object is located on a left side of the multi-camera module. If the horizontal angle of the to-be-shot object relative to the multi-camera module is 30°, it indicates that the to-be-shot object is located 30° to a right side of the front of the multi-camera module. As shown in FIG. 8, a distance from the to-be-shot object to the multi-camera module is 3m, a horizontal angle of the to-be-shot object relative to the multi-camera module is 30°, and a vertical angle of the to-be-shot object relative to the multi-camera module is 20°. A positive vertical angle represents that the to-be-shot object is located above the multi-camera module, and a negative vertical angle represents that the to-be-shot object is located below the multi-camera module. If the vertical angle of the to-be-shot object relative to the multi-camera module is 20°, it indicates that the to-be-shot object is located 20° right above the multi-camera module. In the descriptions of FIG. 6 to FIG. 8, the distance from the to-be-shot object to the multi-camera module may be a distance from the to-be-shot object to a center position of two cameras that form an overlapping area of fields of view in which the to-be-shot object is located, and the horizontal angle or the vertical angle of the to-be-shot object relative to the multi-camera module may be a horizontal angle or a vertical angle of the to-be-shot object relative to an arrangement direction of the two cameras that form the overlapping area of fields of view in which the to-be-shot object is located. Cameras in the multi-camera module are not specifically shown in the figure, and are only uniformly represented by the multi-camera module. In FIG. 7 and FIG. 8, an x-axis direction is a horizontal direction, a y-axis direction is a depth direction, and a z-axis direction in FIG. 8 is a height direction.

In the following embodiments of this application, implementations of step 302 are separately described for a case in which the overlapping area of fields of view includes one to-be-shot object and a case in which the overlapping area of fields of view includes a plurality of to-be-shot objects. Optionally, the to-be-shot object may be a person, or may be any object like an animal, a car, or a factory workpiece. A type of the to-be-shot object is not limited in embodiments of this application.

In a first possible case, the overlapping area of fields of view of the first camera and the second camera includes one to-be-shot object, and an implementation of step 302 may be as follows: The image processing device determines the target stitching parameter based on a stitching parameter corresponding to one or more calibration positions that are in the plurality of calibration positions in the overlapping area of fields of view of the first camera and the second camera and that are closest to the position of the to-be-shot object. Optionally, if the plurality of calibration positions include the position of the to-be-shot object, the image processing device may use a stitching parameter corresponding to the position of the to-be-shot object as the target stitching parameter. If the plurality of calibration positions do not include the position of the to-be-shot object, the image processing device may determine the target stitching parameter based on stitching parameters corresponding to two calibration positions that are in the plurality of calibration positions and that are closest to the position of the to-be-shot object.

Optionally, an implementation of determining, by the image processing device, the target stitching parameter based on the stitching parameters corresponding to the two calibration positions that are in the plurality of calibration positions and that are closest to the position of the to-be-shot object includes: The image processing device obtains, through interpolation calculation based on distances between the position of the to-be-shot object and the two calibration positions by using the stitching parameters corresponding to the two calibration positions, the target stitching parameter corresponding to the position of the to-be-shot object. For example, the to-be-shot object is 2.2m away from the multi-camera module, and the two calibration positions closest to the to-be-shot object are 2m and 3m away from the multi-camera module respectively. In this case, a stitching parameter at a distance of 2.2m away from the multi-camera module may be obtained through interpolation calculation by using a stitching parameter corresponding to a calibration position that is 2m away from the multi-camera module and a stitching parameter corresponding to a calibration position that is 3m away from the multi-camera module, and the stitching parameter is used as the target stitching parameter. Optionally, the interpolation algorithm used herein may be a linear interpolation algorithm or a non-linear interpolation algorithm. For example, a linear interpolation algorithm is used. It is assumed that the stitching parameter corresponding to the calibration position that is 2m away from the multi-camera module is T1, and the stitching parameter corresponding to the calibration position that is 3m away from the multi-camera module is T2. In this case, the stitching parameter that is at the distance of 2.2m away from the multi-camera module and that is obtained through calculation by using the linear interpolation algorithm is (0.8*T1+0.2*T2).

Alternatively, the image processing device may use an average value of the stitching parameters corresponding to the two calibration positions closest to the position of the to-be-shot object as the target stitching parameter corresponding to the position of the to-be-shot object.

In embodiments of this application, when there is only one to-be-shot object in the overlapping area of fields of view of the first camera and the second camera, the stitching parameter corresponding to the position of the to-be-shot object is used as the target stitching parameter, or the target stitching parameter is obtained through calculation based on the stitching parameters corresponding to the two calibration positions closest to the position of the to-be-shot object. When the target stitching parameter is used to stitch the image captured by the first camera and the image captured by the second camera, a stitching effect of the position of the to-be-shot object can be good, so that a display effect of the to-be-shot object in a stitched image can be ensured.

In a second possible case, the overlapping area of fields of view of the first camera and the second camera includes a plurality of to-be-shot objects. In this possible case, the image processing device may determine one stitching parameter for the plurality of to-be-shot objects, or may determine a corresponding stitching parameter for each to-be-shot object in the plurality of to-be-shot objects. The two implementations are separately described in the following embodiments of this application.

In a first implementation, the image processing device may determine one stitching parameter for the plurality of to-be-shot objects. This implementation may be used in a scenario in which the multi-camera module uses a director mode. Optionally, the director mode includes but is not limited to an auto framing (auto framing) mode, a speaker close-up mode, a speaker tracking mode, or a dialog mode. The speaker close-up mode and the speaker tracking mode are used to select and track a speaker in a conference. Face detection needs to be performed in these modes, and sound source positioning further needs to be performed in the speaker close-up mode. Because there is an error in sound source positioning, a sound source position needs to match an image. A face is searched for in a position in an image based on the position obtained through sound source positioning. If the face is successfully found, a close-up of the face is directed. This is a sound image matching process.

In the first implementation, a specific implementation of step 302 may be as follows: The image processing device determines the target stitching parameter based on the plurality of groups of stitching parameters corresponding to the first camera and the second camera and positions of the plurality of to-be-shot objects.

Optionally, an implementation of determining, by the image processing device, the target stitching parameter based on the plurality of groups of stitching parameters corresponding to the first camera and the second camera and the positions of the plurality of to-be-shot objects includes: The image processing device uses a stitching parameter corresponding to a target calibration position as the target stitching parameter, where the target calibration position is a calibration position that is in the plurality of calibration positions and that has a smallest sum of distances to the positions of the plurality of to-be-shot objects. For example, there are three to-be-shot objects in the overlapping area of fields of view of the first camera and the second camera, and distances from the three to-be-shot objects to the multi-camera module are respectively 2m, 3m, and 5m. In this case, a sum of distances from a calibration position that is m away from the multi-camera module to positions of the three to-be-shot objects is 1+0+2=3m, and a sum of distances from a calibration position that is 4m away from the multi-camera module to the positions of the three to-be-shot objects is 2+1+1=4m. Therefore, a stitching parameter corresponding to the calibration position that is 3m away from the multi-camera module may be used as the target stitching parameter.

In this implementation, image stitching effects of the plurality of to-be-shot objects are comprehensively considered, and a stitching parameter corresponding to the calibration position that has the smallest sum of distances to the positions of the plurality of to-be-shot objects is selected as the target stitching parameter. When the target stitching parameter is used to stitch the image captured by the first camera and the image captured by the second camera, an overall stitching effect of the positions of the plurality of to-be-shot objects is good, so that an overall display effect of the plurality of to-be-shot objects in the stitched image is good. In addition, a calculation process of this implementation is simple, and a small quantity of processing resources are consumed.

Optionally, another implementation of determining, by the image processing device, the target stitching parameter based on the plurality of groups of stitching parameters corresponding to the first camera and the second camera and the positions of the plurality of to-be-shot objects includes: The image processing device obtains, for each to-be-shot object in the plurality of to-be-shot objects, a stitching parameter corresponding to one or more calibration positions that are in the plurality of calibration positions and that are closest to the position of the to-be-shot object. The image processing device determines the target stitching parameter based on all the stitching parameters obtained for the plurality of to-be-shot objects. If the plurality of calibration positions include the position of the to-be-shot object, the one or more calibration positions closest to the position of the to-be-shot object may be the position of the to-be-shot object. If the plurality of calibration positions do not include the position of the to-be-shot object, the one or more calibration positions closest to the position of the to-be-shot object may be two calibration positions closest to the position of the to-be-shot object.

Optionally, an implementation process in which the image processing device determines the target stitching parameter based on all the stitching parameters obtained for the plurality of to-be-shot objects includes: The image processing device first determines a stitching parameter corresponding to a position of each to-be-shot object, and then determines the target stitching parameter based on stitching parameters respectively corresponding to the positions of the plurality of to-be-shot objects. For an implementation process in which the image processing device determines a stitching parameter corresponding to a position of a single to-be-shot object, refer to related descriptions in the first possible case. Details are not described herein again in embodiments of this application.

Optionally, the image processing device may use an average value of the stitching parameters respectively corresponding to the positions of the plurality of to-be-shot objects as the target stitching parameter. For example, there are two to-be-shot objects in the overlapping area of fields of view of the first camera and the second camera, a stitching parameter corresponding to a position of one to-be-shot object is T1, and a stitching parameter corresponding to a position of the other to-be-shot object is T2. In this case, the target stitching parameter may be (T1+T2)/2. Alternatively, the image processing device may use a weighted average value of the stitching parameters respectively corresponding to the positions of the plurality of to-be-shot objects as the target stitching parameter, and a weight proportion of a stitching parameter corresponding to a position of each to-be-shot object is positively correlated with a distance to a cluster center of the positions of the plurality of to-be-shot objects.

Alternatively, another implementation process in which the image processing device determines the target stitching parameter based on all the stitching parameters obtained for the plurality of to-be-shot objects includes: The image processing device uses an average value of all the stitching parameters obtained for the plurality of to-be-shot objects as the target stitching parameter. For example, there are two to-be-shot objects in the overlapping area of fields of view of the first camera and the second camera, stitching parameters corresponding to two calibration positions closest to a position of one to-be-shot object are T1 and T2, and stitching parameters corresponding to two calibration positions closest to a position of the other to-be-shot object are T3 and T4. In this case, the target stitching parameter may be (T1+T2+T3+T4)/4.

In this implementation, image stitching effects of the plurality of to-be-shot objects are comprehensively considered, and the target stitching parameter is determined based on a stitching parameter corresponding to one or more calibration positions closest to the to-be-shot objects. When the target stitching parameter is used to stitch the image captured by the first camera and the image captured by the second camera, stitching effects of the positions of the plurality of to-be-shot objects can be compromised, so that the stitching effects of the positions of the plurality of to-be-shot objects tend to be consistent as much as possible. In this way, an overall display effect of the plurality of to-be-shot objects in the stitched image is good.

In a second implementation, the image processing device may determine a corresponding stitching parameter for each to-be-shot object in the plurality of to-be-shot objects. This implementation may be used in a scenario in which the multi-camera module uses an intelligent equalization mode or a multi-person frame mode.

In the second implementation, a specific implementation of step 302 may be as follows: The image processing device determines, for each to-be-shot object in the plurality of to-be-shot objects, a stitching parameter corresponding to the to-be-shot object based on a stitching parameter corresponding to one or more calibration positions that are in the plurality of calibration positions in the overlapping area of fields of view of the first camera and the second camera and that are closest to the position of the to-be-shot object. In other words, in this possible case, the image processing device determines, for each to-be-shot object, a stitching parameter corresponding to a position of the to-be-shot object. For an implementation process in which the image processing device determines a stitching parameter corresponding to a position of a single to-be-shot object, refer to related descriptions in the first possible case. Details are not described herein again in embodiments of this application.

In the intelligent equalization mode or the multi-person frame mode, close-up images of a plurality of persons are combined and then displayed on a same screen. In this possible case, the target stitching parameter includes a stitching parameter corresponding to each to-be-shot object in the plurality of to-be-shot objects.

303: Stitch, by using the target stitching parameter, the first image captured by the first camera and the second image captured by the second camera, to obtain the stitched image.

Optionally, the target stitching parameter includes a parameter for projection transformation of the first camera to the second image, or the target stitching parameter includes a parameter for projection transformation of the first camera to a target planar coordinate system and a parameter for projection transformation of the second image to the target planar coordinate system. The stitching, by using the target stitching parameter, the first image captured by the first camera and the second image captured by the second camera may be transforming, by using the parameter for projection transformation of the first image to the second image, the first image to a pixel coordinate system corresponding to the second image, and then performing image fusion on the second image and the transformed first image; or may be transforming, by using the parameter for projection transformation of the first image to the target planar coordinate system, the first image to a plane on which the target planar coordinate system is located, transforming, by using the parameter for projection transformation of the second image to the target planar coordinate system, the second image to the plane on which the target planar coordinate system is located, and then performing image fusion on the transformed first image and the transformed second image. Performing image fusion on the first image and the second image is actually performing image fusion on an overlapping area of the first image and the second image. Optionally, the target stitching parameter further includes an image fusion parameter. The image processing device may perform image fusion on the overlapping area of the first image and the second image based on the image fusion parameter, for example, adjust brightness of the first image and/or brightness of the second image based on an exposure weight, adjust chroma of the first image and/or chroma of the second image based on a white balance weight, and calculate a pixel value of a pixel in the overlapping area of the first image and the second image based on a pixel value weight. The performing image fusion on the overlapping area of the first image and the second image may include: obtaining a target pixel value through calculation based on a pixel value of a same pixel in the overlapping area of the first image and the second image, and using the target pixel value as the pixel value of the pixel in an image obtained through fusion. When the image fusion parameter includes the pixel value weight of the first image and the second image, the target pixel value may be calculated by using the pixel value weight. Alternatively, when the image fusion parameter does not include the pixel value weight of the first image and the second image, a target pixel value of each pixel in an overlapping area of two frames of images may be calculated by using a weighted averaging method. It is assumed that a same pixel a exists in the overlapping area of the first image and the second image, a pixel value of the pixel a in the first image is p, and a pixel value of the pixel a in the second image is q. In this case, a target pixel value of the pixel a in a final image obtained by fusing the first image and the second image may be (p*0.5+q*0.5).

Based on the first implementation of the first possible case or the second possible case in step 302, the image processing device performs image stitching on all to-be-shot objects once to obtain a stitched image. After the image processing device obtains the stitched image, the image processing device may output a cropped image to a screen for display, where the cropped image is obtained by cropping the stitched image, and the cropped image includes all the to-be-shot objects located in the overlapping area of fields of view of the first camera and the second camera. For example, the image processing device may crop the stitched image to obtain a cropped image including all the to-be-shot objects, and output the cropped image to the screen for display.

Optionally, in the speaker close-up mode, the image processing device may first obtain a panorama image through stitching, and then crop the panorama image to obtain a close-up image of the speaker. To optimize performance and reduce resource consumption, the image processing device may alternatively directly stitch, based on a position of the speaker, only an image of an area in which the speaker is located, to obtain a stitched close-up image of the speaker.

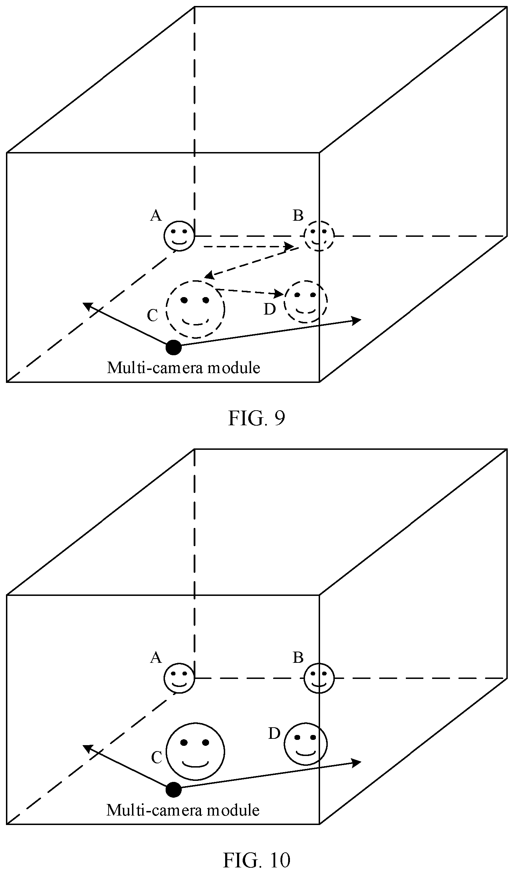

For example, FIG. 9 and FIG. 10 each are a diagram of a conference room scenario according to an embodiment of this application. As shown in FIG. 9 or FIG. 10, a multi-camera module is deployed in the front of a conference room, and there are four different positions A, B, C, and D in the conference room. A structure of the multi-camera module may be shown in FIG. 1. Position A and position C are located in an overlapping area A12 of fields of view of camera 1 and camera 2, and position B and position D are located in an overlapping area A23 of fields of view of camera 2 and camera 3.

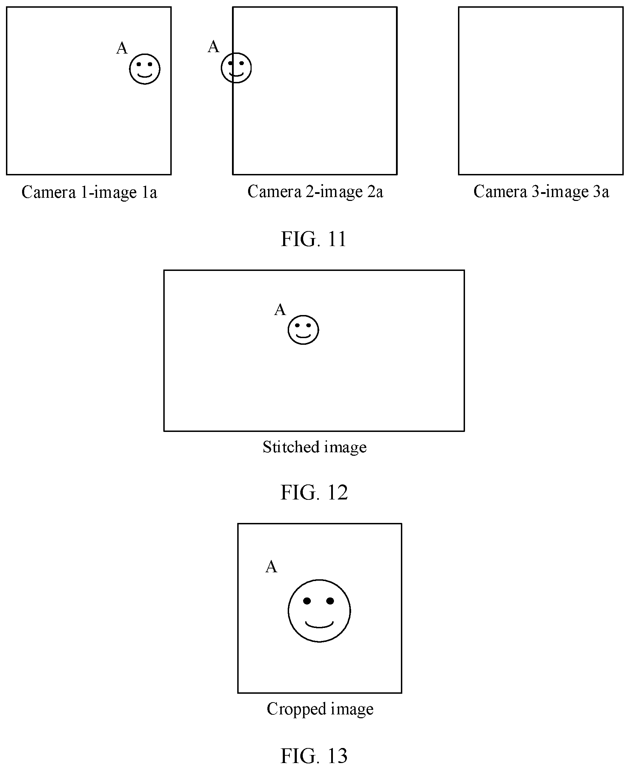

As shown in FIG. 9, it is assumed that a speaker in a director scenario is initially in position A. In this case, images captured by three cameras in the multi-camera module may be shown in FIG. 11, where image 1a is an image captured by camera 1, image 2a is an image captured by camera 2, and image 3a is an image captured by camera 3. Image 2a is a part located in an area in a rectangle. For illustration, in the figure, a part of the speaker that is not completely shot by camera 2 is reflected, and a part outside the rectangle actually does not belong to image 2a. Because the directed speaker is in position A, an image processing device may stitch image 1 and image 2 by using a stitching parameter corresponding to position A, to obtain a stitched image shown in FIG. 12. If a speaker close-up mode is switched to, the image processing device may obtain, through cropping from FIG. 12, a position frame including the speaker for zoom-in display, and an obtained cropped image may be shown in FIG. 13. When the directed speaker moves from position A to position B, the image processing device may stitch, by using a stitching parameter corresponding to position B, an image captured by camera 2 and an image captured by camera 3. Similarly, when the directed speaker is in position C or position D, the image processing device may stitch, by using a stitching parameter corresponding to a position of the speaker, images captured by corresponding cameras.

As shown in FIG. 10, there are four different speakers at four positions A, B, C, and D, and close-ups of different speakers may be separately directed at different moments. When a close-up of the speaker at position A is directed, the image processing device stitches, by using a stitching parameter corresponding to position A, an image captured by camera 1 and an image captured by camera 2. When a close-up of the speaker at position B is directed, the image processing device stitches, by using a stitching parameter corresponding to position B, the image captured by camera 2 and an image captured by camera 3. When a close-up of the speaker at position C is directed, the image processing device stitches, by using a stitching parameter corresponding to position C, the image captured by camera 1 and the image captured by camera 2. When a close-up of the speaker at position D is directed, the image processing device stitches, by using a stitching parameter corresponding to position D, the image captured by camera 2 and the image captured by camera 3. In this way, a position of a current directed close-up object can have a good image stitching effect. This ensures a display effect of the directed close-up object.

Optionally, a director mode and a panoramic display mode may be switched to each other. In the panoramic display mode, the image processing device stitches images captured by all cameras in the multi-camera module. For example, in the conference room scenario shown in FIG. 9 or FIG. 10, the image processing device may first stitch the image captured by camera 1 and the image captured by camera 2, and then stitch an obtained stitched image and the image captured by camera 3, to obtain a panoramic image. Alternatively, the image processing device may first stitch the image captured by camera 1 and the image captured by camera 2, then stitch the image captured by camera 2 and the image captured by camera 3, and further stitch two obtained stitched images, to obtain a panoramic image. The image stitching in embodiments of this application may be stitching images captured by adjacently-deployed cameras.

Based on the second implementation of the second possible case in step 302, the overlapping area of fields of view of the first camera and the second camera includes a plurality of to-be-shot objects, and an implementation of step 303 is as follows: The image processing device stitches, for each to-be-shot object, the first image and the second image by using a stitching parameter corresponding to the to-be-shot object, to obtain a stitched image corresponding to the to-be-shot object. In other words, the image processing device performs image stitching once on each to-be-shot object in the plurality of to-be-shot objects to obtain a plurality of stitched images, to ensure a display effect of each to-be-shot object in a corresponding stitched image.

Optionally, after the image processing device obtains stitched images respectively corresponding to the plurality of to-be-shot objects, the image processing device may output a combined image to a screen for display, where the combined image is obtained by combining a plurality of cropped images, the plurality of cropped images are respectively obtained by cropping a plurality of stitched images corresponding to the plurality of to-be-shot objects, and each cropped image includes a corresponding to-be-shot object in a cropped stitched image. For example, the image processing device may crop a stitched image corresponding to each to-be-shot object, to obtain a cropped image including the corresponding to-be-shot object. The image processing device combines the plurality of cropped images corresponding to the plurality of to-be-shot objects to obtain a combined image, and outputs the combined image to the screen for display.

In embodiments of this application, a stitched image from which each to-be-shot object in the combined image generated by the image processing device comes can ensure that the to-be-shot object has a good display effect. Therefore, a display effect of the finally output combined image can be ensured.

Optionally, in the intelligent equalization mode or the multi-person frame mode, to optimize performance and reduce resource consumption, the image processing device may directly stitch, based on the position of the to-be-shot object by using the stitching parameter corresponding to the to-be-shot object, images including an area in which the to-be-shot object is located. For example, the multi-camera module includes three cameras. If a participant appears only in fields of view of two cameras, only images captured by the two cameras are stitched. If a participant appears in fields of view of three cameras at the same time, images of two adjacent cameras may be selected for stitching, provided that imaging of the participant in a stitched image is complete.

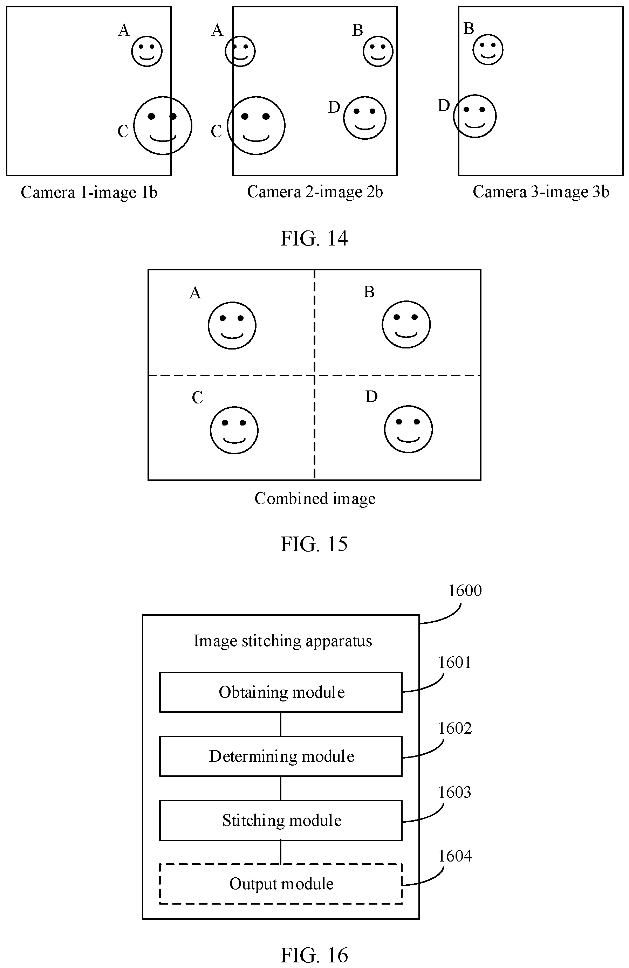

For example, in the conference room scenario shown in FIG. 10, images captured by three cameras in the multi-camera module may be shown in FIG. 14, where image 1b is an image captured by camera 1, image 2b is an image captured by camera 2, and image 3b is an image captured by camera 3. Images 1b to 3b each are a part located in an area in a rectangle. For illustration, in the figure, a part of the speaker that is not completely shot by a camera is reflected, and a part outside the rectangle actually does not belong to a corresponding image. The image processing device may stitch image 1b and image 2b by using a stitching parameter corresponding to position A, and obtain, through cropping from an image obtained through stitching, an area including a speaker in position A. The image processing device may stitch image 2b and image 3b by using a stitching parameter corresponding to position B, and obtain, through cropping from an image obtained through stitching, an area including a speaker in position B. The image processing device may stitch image 1b and image 2b by using a stitching parameter corresponding to position C, and obtain, through cropping from the image obtained through stitching, an area including a speaker in position C. The image processing device may stitch image 2b and image 3b by using a stitching parameter corresponding to position D, and obtain, through cropping from the image obtained through stitching, an area including a speaker in position D. Further, the image processing device may combine four areas obtained through cropping, to obtain a combined image shown in FIG. 15.

Optionally, that the image processing device outputs an image to the screen for display may be displaying the image on a screen of the image processing device, or may be sending the image to another device, so that the another device displays the image. For example, in a video conference scenario, a conference terminal may stitch a plurality of frames of images captured by a local multi-camera module to obtain a stitched image, and may further display the stitched image, a cropped image, or a combined image. Alternatively, the conference terminal may send the stitched image, the cropped image, or the combined image to another remote conference terminal, so that the another conference terminal displays the stitched image, the cropped image, or the combined image.

In the image stitching method provided in embodiments of this application, camera parameters of two adjacently-deployed cameras in the multi-camera module for different calibration positions in the overlapping area of fields of view are calibrated offline. For each calibration position, a stitching parameter may be further determined based on camera parameters obtained by the two cameras through calibration for the calibration position, to obtain stitching parameters respectively corresponding to the different calibration positions. When the to-be-shot object is located in the overlapping area of fields of view of the two cameras, the image processing device may determine, based on the stitching parameters respectively corresponding to the plurality of calibration positions in the overlapping area of fields of view, a stitching parameter suitable for the position of the to-be-shot object, so that a stitching effect of the position of the to-be-shot object in the stitched image is good. In this way, a display effect of the to-be-shot object in the stitched image is improved. In addition, in embodiments of this application, feature point detection and matching do not need to be performed on an image. This is applicable to more image shooting scenarios and requires low computing power.

A sequence of steps of the image stitching method provided in embodiments of this application can be properly adjusted, or steps may be correspondingly added or deleted based on a situation. Any method variation readily figured out by a person skilled in the art within the technical scope disclosed in this application shall fall within the protection scope of this application. For example, in embodiments of this application, an image stitching process is described by using an example in which the to-be-shot object is located in image shooting areas of two cameras in the multi-camera module. If the to-be-shot object is located in image shooting areas of three or more cameras in the multi-camera module, the image processing device may select images captured by two adjacently-deployed cameras for stitching, provided that imaging of the to-be-shot object in an image obtained through stitching is complete. Details are not described one by one in embodiments of this application.

The following describes a virtual apparatus in embodiments of this application by using an example.

For example, FIG. 16 is a diagram of a structure of an image stitching apparatus according to an embodiment of this application. The image stitching image may be used in an image processing device. As shown in FIG. 16, the apparatus 1600 includes but is not limited to: an obtaining module 1601, a determining module 1602, and a stitching module 1603. Optionally, the apparatus 1600 further includes an output module 1604.

The obtaining module 1601 is configured to obtain a plurality of frames of images captured by a multi-camera module at a same moment, where the multi-camera module includes a plurality of cameras, the plurality of cameras include a first camera and a second camera that are adjacently deployed, the first camera and the second camera have an overlapping area of fields of view, and the plurality of frames of images include a first image captured by the first camera and a second image captured by the second camera.

The determining module 1602 is configured to: when the overlapping area of fields of view includes a to-be-shot object, determine a target stitching parameter based on a plurality of groups of stitching parameters corresponding to the first camera and the second camera and a position of the to-be-shot object, where the plurality of groups of stitching parameters are respectively obtained based on camera parameters calibrated by the first camera and the second camera for different calibration positions in the overlapping area of fields of view.

The stitching module 1603 is configured to stitch the first image and the second image by using the target stitching parameter, to obtain a stitched image.

Each group of stitching parameters corresponding to the first camera and the second camera includes a parameter for projection transformation of an image captured by the first camera to an image captured by the second camera, or each group of stitching parameters corresponding to the first camera and the second camera includes a parameter for projection transformation of an image captured by the first camera to a target planar coordinate system and a parameter for projection transformation of an image captured by the second camera to the target planar coordinate system.

Optionally, any two calibration positions in the plurality of calibration positions satisfy the following one or more conditions: Distances from the two calibration positions to a central position of the first camera and the second camera are different; horizontal angles of the two calibration positions relative to an arrangement direction of the first camera and the second camera are different; and vertical angles of the two calibration positions relative to the arrangement direction of the first camera and the second camera are different.

Optionally, the overlapping area of fields of view includes one to-be-shot object, and the determining module 1602 is configured to determine the target stitching parameter based on a stitching parameter corresponding to one or more calibration positions that are in the plurality of calibration positions and that are closest to the position of the to-be-shot object.

Optionally, the determining module 1602 is specifically configured to: if the plurality of calibration positions include the position of the to-be-shot object, use a stitching parameter corresponding to the position of the to-be-shot object as the target stitching parameter; or if the plurality of calibration positions do not include the position of the to-be-shot object, determining the target stitching parameter based on stitching parameters corresponding to two calibration positions that are in the plurality of calibration positions and that are closest to the position of the to-be-shot object.

Optionally, the determining module 1602 is specifically configured to obtain, through interpolation calculation based on distances between the position of the to-be-shot object and the two calibration positions by using the stitching parameters corresponding to the two calibration positions, the target stitching parameter corresponding to the position of the to-be-shot object.

Optionally, the overlapping area of fields of view includes a plurality of to-be-shot objects, and the determining module 1602 is configured to determine the target stitching parameter based on the plurality of groups of stitching parameters and positions of the plurality of to-be-shot objects.

Optionally, the determining module 1602 is specifically configured to use a stitching parameter corresponding to a target calibration position as the target stitching parameter, where the target calibration position is a calibration position that is in the plurality of calibration positions and that has a smallest sum of distances to the positions of the plurality of to-be-shot objects.

Alternatively, the determining module 1602 is specifically configured to: obtain, for each to-be-shot object in the plurality of to-be-shot objects, a stitching parameter corresponding to one or more calibration positions that are in the plurality of calibration positions and that are closest to the position of the to-be-shot object; and determine the target stitching parameter based on all the stitching parameters obtained for the plurality of to-be-shot objects.

Optionally, the output module 1604 is configured to: after the first image and the second image are stitched by using the target stitching parameter, to obtain the stitched image, output a cropped image to a screen for display, where the cropped image is obtained by cropping the stitched image, and the cropped image includes all the to-be-shot objects.

Optionally, the overlapping area of fields of view includes a plurality of to-be-shot objects, and the determining module 1602 is configured to determine, for each to-be-shot object in the plurality of to-be-shot objects, a stitching parameter corresponding to the to-be-shot object based on a stitching parameter corresponding to one or more calibration positions that are in the plurality of calibration positions and that are closest to a position of the to-be-shot object. Correspondingly, the stitching module 1603 is configured to stitch, for each to-be-shot object, the first image and the second image by using the stitching parameter corresponding to the to-be-shot object, to obtain a stitched image corresponding to the to-be-shot object.

Optionally, the output module 1604 is configured to: after the first image and the second image are stitched for each to-be-shot object in the plurality of to-be-shot objects by using the stitching parameter corresponding to the to-be-shot object, to obtain the stitched image corresponding to the to-be-shot object, output a combined image to a screen for display, where the combined image is obtained by combining a plurality of cropped images, the plurality of cropped images are respectively obtained by cropping a plurality of stitched images corresponding to the plurality of to-be-shot objects, and each cropped image includes a corresponding to-be-shot object in a cropped stitched image.

Optionally, the image processing device stores stitching parameters separately corresponding to two adjacently-deployed cameras in the multi-camera module in a plurality of deployment scenarios. The obtaining module 1601 is further configured to: before the target stitching parameter is determined based on the plurality of groups of stitching parameters corresponding to the first camera and the second camera and the position of the to-be-shot object, obtain a deployment scenario of the multi-camera module, and obtain the plurality of groups of stitching parameters corresponding to the first camera and the second camera in the deployment scenario of the multi-camera module.

For the apparatus in the foregoing embodiment, specific manners of executing operations by each module are described in detail in embodiments related to the method, and details are not described herein.

The following describes a basic hardware structure in embodiments of this application by using an example.

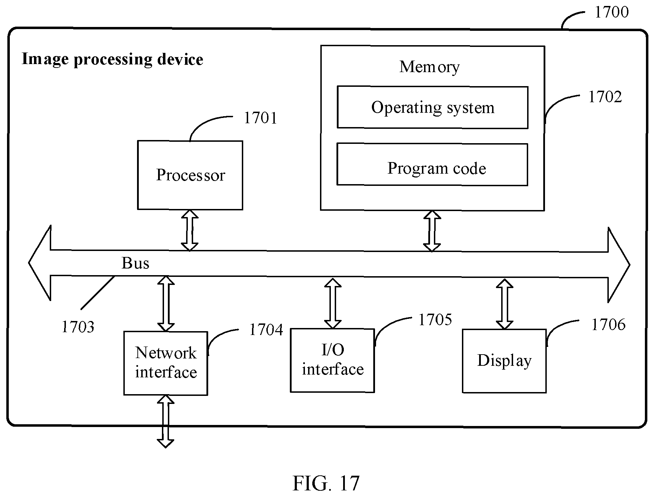

For example, FIG. 17 is a diagram of a hardware structure of an image processing device according to an embodiment of this application. As shown in FIG. 17, the image processing device 1700 includes a processor 1701 and a memory 1702. The memory 1701 is connected to the memory 1702 through a bus 1703. FIG. 17 is described by using an example in which the processor 1701 and the memory 1702 are independent of each other. Optionally, the processor 1701 and the memory 1702 are integrated together. Optionally, with reference to FIG. 2, the image processing device 1700 in FIG. 17 is any conference terminal 201 or the video server 202 in the application scenario shown in FIG. 2.

The memory 1702 is configured to store a computer program. The computer program includes an operating system and program code. The memory 1702 is a storage medium of various types, for example, a read-only memory (read-only memory, ROM), a random access memory (random access memory, RAM), an electrically erasable programmable read-only memory (electrically erasable programmable read-only memory, EEPROM), a compact disc read-only memory (compact disc read-only memory, CD-ROM), a flash memory, an optical memory, a register, a compact disk storage, an optical disc storage, a magnetic disk, or another magnetic storage device.

The processor 1701 is a general-purpose processor or a dedicated processor. The processor 1701 may be a single-core processor or a multi-core processor. The processor 1701 includes at least one circuit, to perform the foregoing image stitching method provided in embodiments of this application.

Optionally, the image processing device 1700 further includes a network interface 1704. The network interface 1704 is connected to the processor 1701 and the memory 1702 through the bus 1703. The network interface 1704 can implement communication between the image processing device 1700 and another device. For example, the processor 1701 can communicate with another device through the network interface 1704 to obtain an image captured by a camera, or the like.

Optionally, the image processing device 1700 further includes an input/output (input/output, I/O) interface 1705, and the I/O interface 1705 is connected to the processor 1701 and the memory 1702 through the bus 1703. The processor 1701 can receive an input command, data, or the like through the I/O interface 1705. The I/O interface 1705 is configured to connect the image processing device 1700 to input devices. These input devices are, for example, a keyboard and a mouse. Optionally, in some possible scenarios, the network interface 1704 and the I/O interface 1705 are collectively referred to as a communication interface.

Optionally, the image processing device 1700 further includes a display 1706. The display 1706 is connected to the processor 1701 and the memory 1702 through the bus 1703. The display 1706 may be configured to display an intermediate result, a final result, and/or the like that are/is generated when the processor 1701 performs the foregoing method, for example, display a stitched image, a cropped image, a combined image, or the like. In a possible implementation, the display 1706 is a touchscreen, to provide a man-machine interaction interface.

The bus 1703 is a communication bus of any type configured to implement interconnection between internal components of the image processing device 1700, for example, a system bus. In this embodiment of this application, an example in which the foregoing components inside the image processing device 1700 are interconnected through the bus 1703 is used for description. Optionally, the foregoing components inside the image processing device 1700 are communicatively connected to each other in a connection manner other than the bus 1703. For example, the foregoing components inside the image processing device 1700 are interconnected through a logical interface inside the image processing device 1700.

The foregoing components may be separately disposed on chips that are independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components.

The image processing device 1700 shown in FIG. 17 is merely an example. During implementation, the image processing device 1700 includes other components, which are not listed one by one in this specification. The image processing device 1700 shown in FIG. 17 may implement image stitching by performing all or some of the steps of the method provided in the foregoing embodiments.

An embodiment of this application further provides a computer-readable storage medium. The computer-readable storage medium stores instructions. When the instructions are executed by a processor, the image stitching method shown in FIG. 3 is implemented.

An embodiment of this application further provides a computer program product, including a computer program. When the computer program is executed by a processor, the image stitching method shown in FIG. 3 is implemented.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In embodiments of this application, terms "first", "second", and "third" are merely used for a purpose of description, and shall not be understood as an indication or implication of relative importance.

The term "and/or" in this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions.

The foregoing descriptions are merely optional embodiments of this application, but are not intended to limit this application. Any modification, equivalent replacement, improvement, or the like made within the concept and principle of this application shall fall within the protection scope of this application.

## Claims

1. An image stitching method, applied to an image processing device, wherein the method comprises:
obtaining a plurality of frames of images captured by a multi-camera module at a same moment, wherein the multi-camera module comprises a plurality of cameras, the plurality of cameras comprise a first camera and a second camera that are adjacently deployed, the first camera and the second camera have an overlapping area of fields of view, and the plurality of frames of images comprise a first image captured by the first camera and a second image captured by the second camera;
when the overlapping area of fields of view comprises a to-be-shot object, determining a target stitching parameter based on a plurality of groups of stitching parameters corresponding to the first camera and the second camera and a position of the to-be-shot object, wherein the plurality of groups of stitching parameters are respectively obtained based on camera parameters calibrated by the first camera and the second camera for different calibration positions in the overlapping area of fields of view; and
stitching the first image and the second image by using the target stitching parameter, to obtain a stitched image.

2. The method according to claim 1, wherein each group of stitching parameters comprises a parameter for projection transformation of an image captured by the first camera to an image captured by the second camera, or each group of stitching parameters comprises a parameter for projection transformation of an image captured by the first camera to a target planar coordinate system and a parameter for projection transformation of an image captured by the second camera to the target planar coordinate system.

3. The method according to claim 1 or 2, wherein any two calibration positions in the plurality of calibration positions satisfy the following one or more conditions:
distances from the two calibration positions to a central position of the first camera and the second camera are different;
horizontal angles of the two calibration positions relative to an arrangement direction of the first camera and the second camera are different; and
vertical angles of the two calibration positions relative to the arrangement direction of the first camera and the second camera are different.

4. The method according to any one of claims 1 to 3, wherein the overlapping area of fields of view comprises one to-be-shot object, and determining the target stitching parameter based on the plurality of groups of stitching parameters corresponding to the first camera and the second camera and the position of the to-be-shot object comprises:
determining the target stitching parameter based on a stitching parameter corresponding to one or more calibration positions that are in the plurality of calibration positions and that are closest to the position of the to-be-shot object.

5. The method according to claim 4, wherein determining the target stitching parameter based on the stitching parameter corresponding to the one or more calibration positions that are in the plurality of calibration positions and that are closest to the position of the to-be-shot object comprises:
if the plurality of calibration positions comprise the position of the to-be-shot object, using a stitching parameter corresponding to the position of the to-be-shot object as the target stitching parameter; or
if the plurality of calibration positions do not comprise the position of the to-be-shot object, determining the target stitching parameter based on stitching parameters corresponding to two calibration positions that are in the plurality of calibration positions and that are closest to the position of the to-be-shot object.

6. The method according to claim 5, wherein determining the target stitching parameter based on the stitching parameters corresponding to the two calibration positions that are in the plurality of calibration positions and that are closest to the position of the to-be-shot object comprises: obtaining, through interpolation calculation based on distances between the position of the to-be-shot object and the two calibration positions by using the stitching parameters corresponding to the two calibration positions, the target stitching parameter corresponding to the position of the to-be-shot object.

7. The method according to any one of claims 1 to 3, wherein the overlapping area of fields of view comprises a plurality of to-be-shot objects, and determining the target stitching parameter based on the plurality of groups of stitching parameters corresponding to the first camera and the second camera and the position of the to-be-shot object comprises:
determining the target stitching parameter based on the plurality of groups of stitching parameters and positions of the plurality of to-be-shot objects.

8. The method according to claim 7, wherein determining the target stitching parameter based on the plurality of groups of stitching parameters and the positions of the plurality of to-be-shot objects comprises:
using a stitching parameter corresponding to a target calibration position as the target stitching parameter, wherein the target calibration position is a calibration position that is in the plurality of calibration positions and that has a smallest sum of distances to the positions of the plurality of to-be-shot objects.

9. The method according to claim 7, wherein determining the target stitching parameter based on the plurality of groups of stitching parameters and the positions of the plurality of to-be-shot objects comprises:
obtaining, for each to-be-shot object in the plurality of to-be-shot objects, a stitching parameter corresponding to one or more calibration positions that are in the plurality of calibration positions and that are closest to the position of the to-be-shot object; and
determining the target stitching parameter based on all the stitching parameters obtained for the plurality of to-be-shot objects.

10. The method according to any one of claims 4 to 9, wherein after stitching the first image and the second image by using the target stitching parameter, to obtain the stitched image, the method further comprises:
outputting a cropped image to a screen for display, wherein the cropped image is obtained by cropping the stitched image, and the cropped image comprises all the to-be-shot objects.

11. The method according to any one of claims 1 to 3, wherein the overlapping area of fields of view comprises a plurality of to-be-shot objects, and determining the target stitching parameter based on the plurality of groups of stitching parameters corresponding to the first camera and the second camera and the position of the to-be-shot object comprises:
determining, for each to-be-shot object in the plurality of to-be-shot objects, a stitching parameter corresponding to the to-be-shot object based on a stitching parameter corresponding to one or more calibration positions that are in the plurality of calibration positions and that are closest to a position of the to-be-shot object, wherein
stitching the first image and the second image by using the target stitching parameter, to obtain the stitched image comprises:
stitching, for each to-be-shot object, the first image and the second image by using the stitching parameter corresponding to the to-be-shot object, to obtain a stitched image corresponding to the to-be-shot object.

12. The method according to claim 11, wherein after stitching, for each to-be-shot object in the plurality of to-be-shot objects, the first image and the second image by using the stitching parameter corresponding to the to-be-shot object, to obtain the stitched image corresponding to the to-be-shot object, the method further comprises:
outputting a combined image to a screen for display, wherein the combined image is obtained by combining a plurality of cropped images, the plurality of cropped images are respectively obtained by cropping a plurality of stitched images corresponding to the plurality of to-be-shot objects, and each cropped image comprises a corresponding to-be-shot object in a cropped stitched image.

13. The method according to any one of claims 1 to 12, wherein the image processing device stores stitching parameters separately corresponding to two adjacently-deployed cameras in the multi-camera module in a plurality of deployment scenarios, and before determining the target stitching parameter based on the plurality of groups of stitching parameters corresponding to the first camera and the second camera and the position of the to-be-shot object, the method further comprises:
obtaining a deployment scenario of the multi-camera module; and
obtaining the plurality of groups of stitching parameters corresponding to the first camera and the second camera in the deployment scenario of the multi-camera module.

14. An image stitching apparatus, used in an image processing device, wherein the apparatus comprises:
an obtaining module, configured to obtain a plurality of frames of images captured by a multi-camera module at a same moment, wherein the multi-camera module comprises a plurality of cameras, the plurality of cameras comprise a first camera and a second camera that are adjacently deployed, the first camera and the second camera have an overlapping area of fields of view, and the plurality of frames of images comprise a first image captured by the first camera and a second image captured by the second camera;
a determining module, configured to: when the overlapping area of fields of view comprises a to-be-shot object, determine a target stitching parameter based on a plurality of groups of stitching parameters corresponding to the first camera and the second camera and a position of the to-be-shot object, wherein the plurality of groups of stitching parameters are respectively obtained based on camera parameters calibrated by the first camera and the second camera for different calibration positions in the overlapping area of fields of view; and
a stitching module, configured to stitch the first image and the second image by using the target stitching parameter, to obtain a stitched image.

15. The apparatus according to claim 14, wherein each group of stitching parameters comprises a parameter for projection transformation of an image captured by the first camera to an image captured by the second camera, or each group of stitching parameters comprises a parameter for projection transformation of an image captured by the first camera to a target planar coordinate system and a parameter for projection transformation of an image captured by the second camera to the target planar coordinate system.

16. The apparatus according to claim 14 or 15, wherein any two calibration positions in the plurality of calibration positions satisfy the following one or more conditions:
distances from the two calibration positions to a central position of the first camera and the second camera are different;
horizontal angles of the two calibration positions relative to an arrangement direction of the first camera and the second camera are different; and
vertical angles of the two calibration positions relative to the arrangement direction of the first camera and the second camera are different.

17. The apparatus according to any one of claims 14 to 16, wherein the overlapping area of fields of view comprises one to-be-shot object, and the determining module is configured to:
determine the target stitching parameter based on a stitching parameter corresponding to one or more calibration positions that are in the plurality of calibration positions and that are closest to the position of the to-be-shot object.

18. The apparatus according to claim 17, wherein the determining module is configured to:
if the plurality of calibration positions comprise the position of the to-be-shot object, use a stitching parameter corresponding to the position of the to-be-shot object as the target stitching parameter; or
if the plurality of calibration positions do not comprise the position of the to-be-shot object, determine the target stitching parameter based on stitching parameters corresponding to two calibration positions that are in the plurality of calibration positions and that are closest to the position of the to-be-shot object.

19. The apparatus according to claim 18, wherein the determining module is configured to:
obtain, through interpolation calculation based on distances between the position of the to-be-shot object and the two calibration positions by using the stitching parameters corresponding to the two calibration positions, the target stitching parameter corresponding to the position of the to-be-shot object.

20. The apparatus according to any one of claims 14 to 16, wherein the overlapping area of fields of view comprises a plurality of to-be-shot objects, and the determining module is configured to:
determine the target stitching parameter based on the plurality of groups of stitching parameters and positions of the plurality of to-be-shot objects.

21. The apparatus according to claim 20, wherein the determining module is configured to:
use a stitching parameter corresponding to a target calibration position as the target stitching parameter, wherein the target calibration position is a calibration position that is in the plurality of calibration positions and that has a smallest sum of distances to the positions of the plurality of to-be-shot objects.

22. The apparatus according to claim 20, wherein the determining module is configured to:
obtain, for each to-be-shot object in the plurality of to-be-shot objects, a stitching parameter corresponding to one or more calibration positions that are in the plurality of calibration positions and that are closest to the position of the to-be-shot object; and
determine the target stitching parameter based on all the stitching parameters obtained for the plurality of to-be-shot objects.

23. The apparatus according to any one of claims 17 to 22, wherein the apparatus further comprises:
an output module, configured to: after the first image and the second image are stitched by using the target stitching parameter, to obtain the stitched image, output a cropped image to a screen for display, wherein the cropped image is obtained by cropping the stitched image, and the cropped image comprises all the to-be-shot objects.

24. The apparatus according to any one of claims 14 to 16, wherein the overlapping area of fields of view comprises a plurality of to-be-shot objects, and the determining module is configured to:
determine, for each to-be-shot object in the plurality of to-be-shot objects, a stitching parameter corresponding to the to-be-shot object based on a stitching parameter corresponding to one or more calibration positions that are in the plurality of calibration positions and that are closest to a position of the to-be-shot object; and
the stitching module is configured to:
stitch, for each to-be-shot object, the first image and the second image by using the stitching parameter corresponding to the to-be-shot object, to obtain a stitched image corresponding to the to-be-shot object.

25. The apparatus according to claim 24, wherein the apparatus further comprises:
an output module, configured to: after the first image and the second image are stitched for each to-be-shot object in the plurality of to-be-shot objects by using the stitching parameter corresponding to the to-be-shot object, to obtain the stitched image corresponding to the to-be-shot object, output a combined image to a screen for display, wherein the combined image is obtained by combining a plurality of cropped images, the plurality of cropped images are respectively obtained by cropping a plurality of stitched images corresponding to the plurality of to-be-shot objects, and each cropped image comprises a corresponding to-be-shot object in a cropped stitched image.

26. The apparatus according to any one of claims 14 to 25, wherein the image processing device stores stitching parameters separately corresponding to two adjacently-deployed cameras in the multi-camera module in a plurality of deployment scenarios; and
the obtaining module is further configured to: before the target stitching parameter is determined based on the plurality of groups of stitching parameters corresponding to the first camera and the second camera and the position of the to-be-shot object, obtain a deployment scenario of the multi-camera module, and obtain the plurality of groups of stitching parameters corresponding to the first camera and the second camera in the deployment scenario of the multi-camera module.

27. An image stitching apparatus, comprising a processor and a memory, wherein
the memory is configured to store a computer program, wherein the computer program comprises program instructions; and
the processor is configured to invoke the computer program, to implement the image stitching method according to any one of claims 1 to 13.

28. A computer-readable storage medium, wherein the computer-readable storage medium stores instructions, and when the instructions are executed by a processor, the image stitching method according to any one of claims 1 to 13 is implemented.

29. A computer program product, comprising a computer program, wherein when the computer program is executed by a processor, the image stitching method according to any one of claims 1 to 13 is implemented.
